# EUROPÄISCHE PATENTANMELDUNG

(11) **EP 1 351 091 A2**
(43) Veröffentlichungstag der Anmeldung: **08.10.2003**
(21) Anmeldenummer: 03000445.1
(22) Anmeldetag: 10.01.2003
(51) Int. Cl.: G02B 27/09

(54) **Optische Anordnung mit einer Blende**

(30) Priorität: 07.03.2002 DE 10210893
(71) Anmelder: Carl Zeiss Laser Optics GmbH, 73447 Oberkochen (DE)
(72) Erfinder: Anderl, Willi, 73460 Hüttlingen (DE)
(74) Vertreter: Heuckeroth, Volker, Dr.

(57) **Zusammenfassung**

Eine optische Anordnung (10) innerhalb eines optischen Systems weist ein in einem Gehäuse (18) angeordnetes optisches Bauelement (20) auf, das einen optisch wirksamen ersten Bereich (24), der auf einer optischen Achse (16) des optischen Systems positioniert ist, und einen den optisch wirksamen ersten Bereich (24) zumindest teilweise umgebenden optisch unwirksamen zweiten Bereich (26) auf. Mit dem optisch unwirksamen zweiten Bereich (26) des Bauelements (20) ist zumindest ein wärmeleitfähiges Element (32, 34) zum Abführen von Wärme von dem optisch unwirksamen zweiten Bereich (26) aus dem Gehäuse (18) heraus wärmeleitend verbunden (Fig. 2).

## Beschreibung

Die Erfindung betrifft eine optische Anordnung innerhalb eines optischen Systems, mit einem in einem Gehäuse angeordneten optischen Bauelement, insbesondere einer Blende, das einen optisch wirksamen ersten Bereich, der auf einer optischen Achse des optischen Systems positioniert ist, und einen den optisch wirksamen ersten Bereich zumindest teilweise umgebenden optisch unwirksamen zweiten Bereich aufweist.

Eine derartige optische Anordnung ist aus dem Dokument US 5,161,238 bekannt.

Bei optischen Anordnungen der eingangs genannten Art besteht das Problem, daß sich das im Strahlengang des optischen Systems befindende optische Bauelement aufgrund von Absorption des auf das optische Bauelement auftreffenden Lichts mit der Zeit erwärmt. Dieses Problem ergibt sich insbesondere bei Blenden von optischen Modulen an Lasern, insbesondere an Excimer-Lasern. Bei einer Blende wird der optisch wirksame erste Bereich durch die Blendenöffnung gebildet, während der optisch unwirksame zweite Bereich durch den Blendenkörper gebildet wird, über den die Blende in einem Gehäuse gehalten bzw. befestigt ist.

Während die vorliegende Erfindung bevorzugt bei einer Blende Anwendung findet, ist sie jedoch nicht auf eine derartige Anwendung beschränkt. In diesem Sinne kann ein optisches Bauelement auch eine Linse, ein Prisma, ein Spiegel, ein Gitter und Kombinationen derartiger Bauelemente sein, bei denen der optisch wirksame erste Bereich die optisch nutzbare Lichtdurchtrittszone bzw. Lichtreflexionszone ist, während der optisch unwirksame zweite Bereich die optisch nicht nutzbare Fassung oder Halterung des Bauelements ist, der gleichwohl von dem Licht des optischen Systems beaufschlagt sein kann, beispielsweise wenn der Lichtstrahlquerschnitt größer ist als der optisch wirksame erste Bereich.

Bei einer Blende tritt ein Teil der Lichtstrahlung durch die Blendenöffnung hindurch, während ein nicht zu vernachlässigender Teil des Lichtstrahls im Bereich um die Blendenöffnung auf den Blendenkörper auftrifft und den Blendenkörper aufheizt. Dies ist insbesondere der Fall, wenn der Blendenkörper wie üblicherweise ein Metallkörper ist, der entsprechende Absorptionseigenschaften besitzt.

Das Aufheizen des Blendenkörpers führt zu einer Wärmeausdehnung bzw. zu Wärmespannungen, die sich von dem Blendenkörper auf das Gehäuse übertragen, und da an dem Gehäuse beispielsweise auch andere optische Bauelemente über mechanische Halterungen befestigt sind, kann sich die Position dieser optischen Bauelemente verändern, wodurch diese optischen Bauelemente nicht mehr ordnungsgemäß justiert sind.

Dies führt beispielsweise bei einer Blende eines optischen Moduls für Bandbreiteneinengung und Wellenlängenselektion bei Excimer-Lasern zu einem thermischen Driften der zu erzielenden Wellenlänge und Bandbreite des Lasers während der Aufheiz- und Abkühlvorgänge.

Die DE 38 18 129 A1 offenbart eine Blende zum Begrenzen von Laserstrahlen, wobei die Blende verspiegelt und so in bezug auf den Lichtstrahl angeordnet ist, daß die von der Blende reflektierten Strahlteile von der Lichtstrahlachse weg gerichtet sind. Durch die Verspiegelung soll ein Aufheizen der Blende vermieden werden, um am Rand der Blende eine Schlierenbildung, die die Lichtausbreitung beeinträchtigt, aufgrund einer Erwärmung der die Blende umgebenden Luft zu vermeiden. Die von der Blende von der Lichtstrahlachse weg reflektierten Strahlteile werden auf einen Absorber gerichtet, der hinreichend weit vom Lichtstrahl entfernt angeordnet ist. Somit wird zwar eine Erwärmung der Blende selbst vermieden, jedoch kann das wegreflektierte Licht unmittelbar oder über die sich aufheizenden Absorber wiederum eine Aufheizung des Gehäuses bewirken, so daß im oben beschriebenen Sinne ein thermisches Driften der Parameter des Lichts bzw. der Lichtcharakteristik des optischen Systems nicht sicher vermieden werden kann.

Der Erfindung liegt daher die Aufgabe zugrunde, eine optische Anordnung der eingangs genannten Art dahingehend weiterzubilden, daß ein solches thermisches Driften zumindest reduziert wird.

Erfindungsgemäß wird diese Aufgabe hinsichtlich der eingangs genannten optischen Anordnung dadurch gelöst, daß mit dem optisch unwirksamen zweiten Bereich des Bauelements zumindest ein wärmeleitfähiges Element zum Abführen von Wärme von dem optisch unwirksamen zweiten Bereich aus dem Gehäuse heraus wärmeleitend verbunden ist.

Anstatt wie im Stand der Technik eine Aufheizung des optisch unwirksamen zweiten Bereichs mittels einer reflektierenden Beschichtung zu vermeiden, geht die vorliegende Erfindung von dem Grundgedanken aus, die im optisch unwirksamen zweiten Bereich durch Absorption entstehende Wärme über das zumindest eine wärmeleitfähige Element aus dem Gehäuse heraus abzuführen, wodurch die Gefahr von Wärmeausdehnungen bzw. Wärmespannungen in dem optisch unwirksamen zweiten Bereich des optischen Bauelements, die sich auf das Gehäuse übertragen können, vermindert oder sogar ausgeschlossen werden können. Der optisch unwirksame zweite Bereich kann daher weiterhin selbst absorbierend sein, wodurch der Vorteil erzielt wird, daß im Unterschied zum Stand der Technik übermäßiges Streulicht, das die Lichtcharakteristik des optischen Systems ebenfalls stören kann, vermieden wird. Eine Wärmeübertragung auf das Gehäuse und damit auf andere optische Bauelemente wird durch die vorliegende Erfindung zumindest reduziert. Ein thermisches Driften der Lichtcharakteristik wird somit zumindest reduziert.

In einer bevorzugten Ausgestaltung ist innerhalb des zweiten Bereichs zumindest eine Wärmebarriere angeordnet.

Die zumindest eine Wärmebarriere hat den Vorteil, daß die im Lichtauftreffbereich des optisch unwirksamen zweiten Bereichs entstehende Wärme nicht über die Wärmebarriere hinaus zum Gehäuse hin abfließen kann, sondern im Bereich innerhalb der Wärmebarriere aufgestaut wird, wo sie dann über das zumindest eine wärmeleitfähige Element aus dem Gehäuse heraus abgeführt wird.

In einer weiteren bevorzugten Ausgestaltung ist die zumindest eine Wärmebarriere durch zumindest ein in dem zweiten Bereich angeordnetes Wärmeisolatorelement gebildet.

Ein derartiges Wärmeisolatorelement kann beispielsweise ein Keramikelement sein.

Besonders bevorzugt ist es, wenn die zumindest eine Wärmebarriere durch zumindest einen Luftspalt in dem zweiten Bereich gebildet ist.

Neben einer kostengünstigeren und einfacheren Herstellbarkeit der Wärmebarriere in dem optisch unwirksamen zweiten Bereich des optischen Bauelements hat diese Maßnahme den Vorteil, daß die an den Luftspalt angrenzenden Abschnitte des optisch unwirksamen zweiten Bereichs auch mechanisch voneinander entkoppelt sind, so daß sich Wärmeausdehnungen bzw. Wärmespannungen nicht über den Luftspalt hinaus fortpflanzen können.

In einer weiteren bevorzugten Ausgestaltung weist der zweite Bereich einen der optischen Achse näher gelegenen inneren Abschnitt und einen diesen umgebenden äußeren Abschnitt auf, wobei die beiden Abschnitte über zumindest einen Gelenkabschnitt miteinander verbunden sind.

Der zumindest eine Gelenkabschnitt zwischen den beiden Abschnitten des optisch unwirksamen zweiten Bereichs des optischen Bauelements führt vorteilhafterweise zu einer Spannungsentkopplung zwischen dem inneren Abschnitt, der dem Licht überwiegend ausgesetzt ist, und dem äußeren Abschnitt, der dem Licht im wesentlichen nicht ausgesetzt ist, so daß sich eine Wärmeausdehnung bzw. Wärmespannung im inneren Abschnitt nicht auf den äußeren Abschnitt überträgt bzw. die Wärmeausdehnung bzw. Wärmespannung im inneren Abschnitt durch den äußeren Abschnitt nicht behindert wird.

In diesem Zusammenhang ist es weiterhin bevorzugt, wenn mehrere Gelenkabschnitte vorgesehen sind, die bezüglich der optischen Achse symmetrisch verteilt sind.

Diese Maßnahme führt dazu, daß sich eine Wärmeausdehnung des inneren Abschnitts symmetrisch verhält. Somit wird erreicht, daß die Lage des optischen Bauelements trotz Wärmeausdehnung im optisch unwirksamen zweiten Bereich nicht driftet.

In Verbindung mit einer der zuvor genannten Ausgestaltungen, wonach die zumindest eine Wärmebarriere durch zumindest einen Luftspalt in dem zweiten Bereich gebildet ist, ist es weiterhin bevorzugt, wenn der zumindest eine Luftspalt durch Materialausnehmung in dem zweiten Bereich gebildet ist, und daß der zumindest eine Gelenkabschnitt durch bei der Materialausnehmung stehengebliebene Materialstege gebildet ist.

Mit dieser Maßnahme wird nicht nur auf konstruktiv einfache Weise die zumindest eine Wärmebarriere in dem optisch unwirksamen zweiten Bereich des optischen Bauelements geschaffen, sondern auch in ebenso einfacher Weise der zumindest eine Gelenkabschnitt zwischen dem inneren und dem äußeren Abschnitt des zweiten Bereichs des optischen Bauelements, indem die bei der Materialausnehmung stehengebliebenen Materialstege eine Art Federgelenke bilden, die eine entsprechende Spannungsentkopplung zwischen dem inneren und dem äußeren Abschnitt des zweiten Bereichs bewirken. Darüber hinaus wirken diese Materialstege bei entsprechend geringem Querschnitt auch als Wärmebarrieren, so daß der innere Abschnitt von dem äußeren Abschnitt nicht nur spannungsentkoppelt, sondern auch weitestgehend wärmeentkoppelt ist.

In einer weiteren bevorzugten Ausgestaltung ist das zumindest eine wärmeleitfähige Element eine Stange, die mit zumindest einem Ende aus dem Gehäuse herausgeführt ist, ohne das Gehäuse zu berühren.

Durch diese Maßnahme wird mit konstruktiv einfachen Mitteln eine Wärmeabführung von dem optischen Bauelement erreicht, wobei vermieden wird, daß bei der Wärmeabführung eine wärmeleitende Verbindung zu dem Gehäuse besteht. Die Stange kann von beliebiger Querschnittsform, vorzugsweise rund, sein.

Dabei ist es gemäß einer ersten Ausgestaltung weiterhin bevorzugt, wenn die Stange zumindest teilweise massiv aus einem wärmeleitfähigen Material ausgebildet ist.

Diese Maßnahme stellt eine besonders kostengünstige Ausgestaltung des zumindest einem wärmeleitfähigen Elements dar. Beispielsweise kann die Stange aus Kupfer gefertigt sein.

In einer alternativen bevorzugten Ausgestaltung ist die Stange zumindest teilweise hohl und von einer zirkulierenden Flüssigkeit durchströmt.

Der Vorteil dieser Maßnahme besteht darin, daß die Wärmeabfuhr von dem optischen Bauelement über die zirkulierende Flüssigkeit noch effizienter erfolgen kann, insbesondere dann, wenn die Flüssigkeit außerhalb des Gehäuses zusätzlich gekühlt wird.

Ebenso bevorzugt ist es, wenn die Stange als Heat-Pipe ausgebildet ist.

Die Ausgestaltung der Stange als Heat-Pipe hat den Vorteil, daß keine zusätzlichen Maßnahmen für eine Kühlung einer Flüssigkeit in der Stange erforderlich sind. Eine Heat-Pipe beruht auf dem Prinzip, daß in der dann hermetisch abgedichteten vakuumisierten Stange eine geringe Menge an Flüssigkeit vorhanden ist, die bei der Aufnahme der Wärme von dem optisch unwirksamen zweiten Bereich des Bauelements verdampft. Der Dampf bewegt sich zu dem außerhalb des Gehäuses befindlichen kälteren Ende der Stange, wo der Dampf kondensiert. Das Kondensat wird dann entweder durch Schwerkraft und/oder durch Kapillarwirkung von im Wandbereich der Stange vorgesehenen Fasern wieder zu dem wärmeren Ende, d.h. zu dem optischen Bauelement zurückgeführt.

In einer weiteren bevorzugten Ausgestaltung sind eine Mehrzahl an Stangen als wärmeleitfähige Elemente mit dem zweiten Bereich des optischen Bauelements in bezüglich der optischen Achse symmetrischer Anordnung verbunden.

Hierbei ist von Vorteil, daß die Wärmeabfuhr von dem optisch unwirksamen zweiten Bereich des optischen Bauelements symmetrisch erfolgt, so daß eine asymmetrische Wärmeverteilung in dem optisch unwirksamen zweiten Bereich, die zu Verspannungen und Lageänderungen des optischen Bauelements Anlaß geben kann, weitestgehend vermieden wird.

In einer weiteren bevorzugten Ausgestaltung ist am aus dem Gehäuse vorstehenden Ende der zumindest einen Stange zumindest ein Wärmeabstrahlkörper angeordnet.

Durch den zumindest einen Wärmeabstrahlkörper wird die Oberfläche des aus dem Gehäuse vorstehenden Endes der zumindest einen Stange vergrößert, wodurch die Wärmeabgabe von der Stange an die Umgebung außerhalb des Gehäuses verbessert wird. Vorzugsweise sind eine Mehrzahl derartiger Wärmeabstrahlkörper, beispielsweise in Form von Stangen oder Blechen vorgesehen. In diesem Zusammenhang hat die Ausgestaltung der zumindest einen Stange als Heat-Pipe den Vorteil, daß der zumindest eine Wärmeabstrahlkörper sehr weit vom optischen Bauelement entfernt angeordnet werden kann, weil Heat-Pipes außerordentlich gute Wärmeleiteigenschaften besitzen.

In einer weiteren bevorzugten Ausgestaltung befindet sich die zumindest eine Stange vollständig in der Umgebungsatmosphäre.

Dies hat den Vorteil, daß bei solchen optischen Anordnungen, bei denen die optischen Bauelemente zur Umgebungsatmosphäre hin abgedichtet sein müssen, diese Abdichtung trotz der Wärmeabfuhr an die Umgebung weiterhin gewährleistet bleibt.

Wie bereits erwähnt, hat die vorliegende Erfindung besondere Vorteile, wenn das Bauelement eine Blende ist, wobei der optisch wirksame erste Bereich die Blendenöffnung und der optisch unwirksame zweite Bereich der die Blendenöffnung umgebende Blendenkörper ist.

Die Erfindung betrifft ferner ein optisches System, insbesondere ein Laser-System, das eine optische Anordnung nach einer der vorstehend genannten Ausgestaltungen aufweist. Besonders bevorzugt ist eine Anwendung der vorliegenden Erfindung bei einer Blende eines Optik-Moduls zur Bandbreiteneinengung und Wellenlängenselektion an einem Excimer-Laser.

Weitere Vorteile und Merkmale ergeben sich aus der nachfolgenden Beschreibung und der beigefügten Zeichnung.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: eine schematische Darstellung einer optischen Anordnung innerhalb eines optischen Systems, wobei das optische System einen Laser mit einem daran angeordneten optischen Modul aufweist;
- Fig. 2: einen Schnitt entlang der Linie II-II in Fig. 1 durch die optische Anordnung in Fig. 1; und
- Fig. 3: eine ausschnittsweise, mit Fig. 2 vergleichbare Darstellung eines weiteren Ausführungsbeispiels der Erfindung.

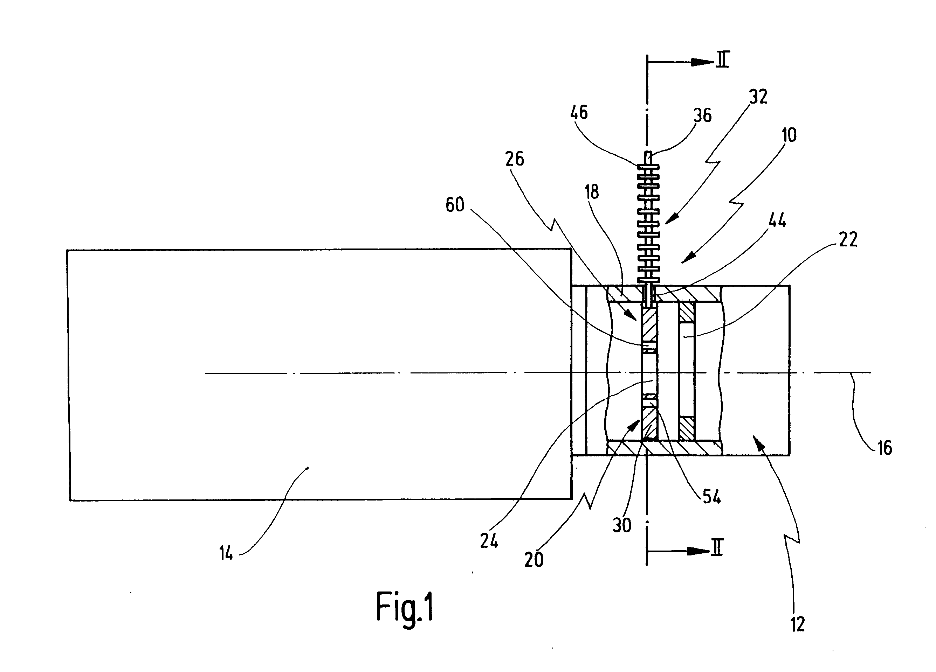

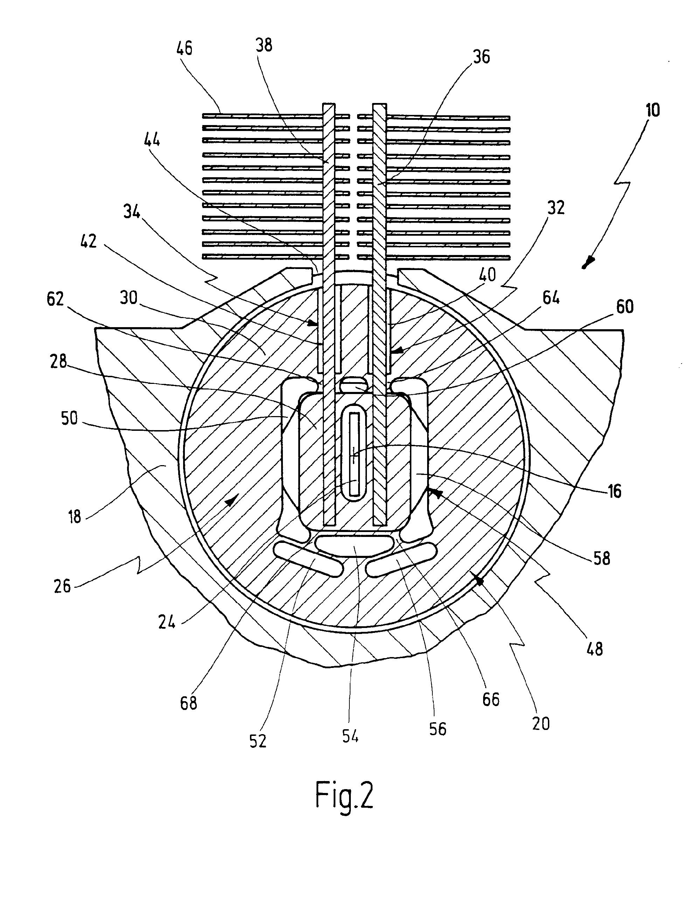

In Fig. 1 und 2 ist eine mit dem allgemeinen Bezugszeichen 10 versehene optische Anordnung innerhalb eines optischen Systems 12 dargestellt. Das optische System 12 ist beispielsweise ein Optik-Modul zur Bandbreiteneinengung und Wellenlängenselektion des von einem Excimer-Laser 14 emittierten Lichts.

Eine optische Achse des optischen Systems 12 ist mit dem Bezugszeichen 16 versehen.

Die optische Anordnung 10 weist ein Gehäuse 18 auf, in dem ein optisches Bauelement 20 angeordnet ist, das mit dem Gehäuse 18 verbunden ist. Das optische System 12 weist ein weiteres optisches schematisch dargestelltes Bauelement 22 auf, das beispielsweise im Zusammenwirken mit dem optischen Bauelement 20, das hiernach noch näher beschrieben wird, und weiteren nicht dargestellten Bauelementen in der Lage ist, beispielsweise die gewünschte Bandbreiteneinengung und Wellenlängenselektion zu bewirken. Das optische Bauelement 22 ist ebenfalls mit dem Gehäuse 18 der optischen Anordnung 10 verbunden bzw. daran befestigt.

Das optische Bauelement 20 ist im vorliegenden Ausführungsbeispiel eine Blende zur Begrenzung des von dem Excimer-Laser 14 emittierten Lichts.

Das optische Bauelement bzw. die Blende 20 weist einen optisch wirksamen ersten Bereich 24 auf, der im vorliegenden Fall durch die Blendenöffnung gebildet ist, und der auf der optischen Achse 16 positioniert ist. Das optische Bauelement bzw. die Blende 20 weist weiter einen den optisch wirksamen Bereich 24 umgebenden optisch unwirksamen zweiten Bereich 26 auf, der vorliegend durch den Blendenkörper gebildet ist. Der optisch unwirksame zweite Bereich 26 ist mit dem Gehäuse 18 verbunden bzw. an diesem befestigt.

Der optisch unwirksame zweite Bereich 26 weist einen näher zur optischen Achse 16 gelegenen inneren Abschnitt 28 und einen diesen umgebenden äußeren Abschnitt 30 auf.

Das von dem Excimer-Laser 14 emittierte Licht geht teilweise durch den optisch wirksamen ersten Bereich 24, d.h. die Blendenöffnung hindurch, während ein übriger Teil des von dem Excimer-Laser 14 emittierten Lichts auf den inneren Abschnitt 28 des optisch unwirksamen zweiten Bereichs 26 des optischen Bauelements 20 auftrifft. Dieser auf den inneren Abschnitt 28 auftreffende Teil des Lichts wird von dem inneren Abschnitt 28 zumindest teilweise absorbiert und führt damit zu einer Erwärmung des inneren Abschnittes 28.

Die durch die Lichtabsorption in dem inneren Abschnitt 28 des optisch unwirksamen zweiten Bereichs 26 des optischen Bauelements 20 wird über zwei wärmeleitfähige Elemente 32 und 34 von dem optisch unwirksamen zweiten Bereich 26, genauer gesagt von dem inneren Abschnitt 28 desselben aus dem Gehäuse 18 heraus abgeführt, wozu die wärmeleitfähigen Elemente 32 und 34 mit dem inneren Abschnitt 28 des optisch unwirksamen zweiten Bereichs 26 wärmeleitend verbunden sind.

In dem in Fig. 2 dargestellten Ausführungsbeispiel sind die wärmeleitfähigen Elemente 32 und 34 in Form jeweils einer Stange 36 bzw. 38 ausgebildet. Die Stangen 36 und 38 sind massiv aus einem wärmeleitfähigen Material, beispielsweise Kupfer, ausgebildet.

Die Stangen 36 und 38 sind in Bohrungen in dem inneren Abschnitt 28 des optisch unwirksamen zweiten Bereichs 26 des optischen Bauelements 20 eingesetzt und stehen in diesen Bohrungen mit dem inneren Abschnitt 28 wärmeleitend in Kontakt. Die Stangen 36 und 38 sind des weiteren durch Bohrungen 40 und 42 in dem äußeren Abschnitt 30 des optisch unwirksamen Bereichs 26 des optischen Bauelements 20 durchgeführt, wobei diese Bohrungen 40 und 42 jedoch einen solchen Innendurchmesser aufweisen, daß die Stangen 36 und 38 den äußeren Abschnitt 30 entlang der Bohrungen 40 und 42 nicht berühren, so daß keine wärmeleitende Verbindung zwischen den Stangen 36 und 38 und dem äußeren Abschnitt 30 über die gesamte Länge der Bohrungen 40 und 42 besteht.

Die Stangen 36 und 38 sind durch eine Öffnung 44 aus dem Gehäuse 18 herausgeführt, ohne dabei das Gehäuse 18 zu berühren, so daß auch keine wärmeleitende Verbindung zwischen den Stangen 36 und 38 und dem Gehäuse 18 besteht.

Die Stangen 36 und 38 sind bezüglich der optischen Achse 16 symmetrisch zueinander angeordnet. Die Symmetrie besteht vorliegend in einer Spiegelsymmetrie zu einer die optische Achse 16 enthaltenden Ebene parallel zu den Stangen 36 und 38.

An dem aus dem Gehäuse 18 vorstehenden Ende weisen die Stangen 36 und 38 jeweils eine Vielzahl von Wärmeabstrahlkörpern 46 auf, die mit den Stangen 36 und 38 wärmeleitend verbunden sind. Die Wärmeabstrahlkörper 46 sind beispielsweise in Form von Blechstreifen aus Kupfer ausgebildet.

Die Stangen 36 und 38 befinden sich komplett in der äußeren Umgebungsatmosphäre, die außerhalb des Gehäuses 18 herrscht. Somit entfällt eine Abdichtung im Gehäuse 18 oder im äußeren Abschnitt 30 zu den Stangen 36 und 38 hin.

Zwischen dem inneren Abschnitt 28 und dem äußeren Abschnitt 30 des optisch unwirksamen zweiten Bereichs 26 des optischen Bauelements 20 ist eine Mehrzahl an Wärmebarrieren 48 angeordnet. Die Wärmebarrieren 48 sind in Form von Luftspalten 50, 52, 54, 56, 58 und 60 in dem optisch unwirksamen zweiten Bereich 26 ausgebildet. Die Luftspalte 50 bis 60 sind durch eine entsprechende Materialausnehmung bzw. -ausschneidung in dem zweiten Bereich 26 gebildet. Die Wärmebarrieren 48 in Form der Luftspalte 50 bis 60 verhindern, daß in dem inneren Abschnitt 28 durch Lichteinwirkung entstehende Wärme über die Wärmebarrieren 48 hinaus in den äußeren Abschnitt 30 übertragen wird.

Anstelle von Luftspalten können die Wärmebarrieren 48 auch durch Wärmeisolatorelemente, beispielsweise Keramikelemente, gebildet sein.

Die Stangen 36 und 38 sind ferner durch Abschnitte 62 und 64 des optisch unwirksamen zweiten Bereichs 26 durchgeführt.

Bei der Ausgestaltung der Wärmebarrieren 48 als Luftspalte 50 bis 58 werden in konstruktiv einfacher Weise Gelenkabschnitte 66 und 68 gebildet, wodurch der innere Abschnitt 28 mit dem äußeren Abschnitt 30 in der Art von Federgelenken verbunden ist. Die Gelenkabschnitte 66 und 68, die zwischen den Luftspalten 50 bis 58 bei der Materialausschneidung als Materialstege stehengeblieben sind, sind bezüglich der optischen Achse 16 symmetrisch verteilt angeordnet, wie aus Fig. 2 hervorgeht. Die Symmetrie ist bezüglich der gleichen Ebene wie die Symmetrie der Anordnung der Stangen 36 und 38 gegeben.

Die Gelenkabschnitte 66 und 68 bewirken eine Spannungsentkopplung zwischen dem inneren Abschnitt 28 und dem äußeren Abschnitt 30 des optisch unwirksamen zweiten Bereichs 26 des optischen Bauelements 20, wodurch die thermisch bedingte Ausdehnung des inneren Abschnitts 28 nicht behindert wird bzw. nicht zu Verspannungen in dem äußeren Abschnitt 30 führt, die sich auf das Gehäuse übertragen und die Justierung des optischen Bauelements 22 und weiterer Elemente verändern könnten. Zudem wirken die Gelenkabschnitte 66 und 68 aufgrund ihres geringen Querschnitts als Wärmeisolatoren. In Verbindung mit den Luftspalten 50 bis 60 wird eine Wärmeübertragung von dem inneren Abschnitt 28 auf den äußeren Abschnitt 30 und damit auf das Gehäuse 18 vermieden, wodurch das weitere optische Bauelement 22 des optischen Systems 12 ordnungsgemäß lagejustiert bleibt, d.h. nicht aufgrund einer Erwärmung seine Lage verändert, was die optische Charakteristik des optischen Systems 12 verändern könnte.

Die durch Lichteinwirkung in dem inneren Abschnitt 28 des optisch unwirksamen zweiten Bereichs 26 des optischen Bauelements 20 erzeugte Wärme wird über die wärmeleitfähigen Stangen 36 und 38 aus dem Gehäuse 18 heraus abgeführt und über die Wärmeabstrahlkörper 46 an die Umgebung abgestrahlt.

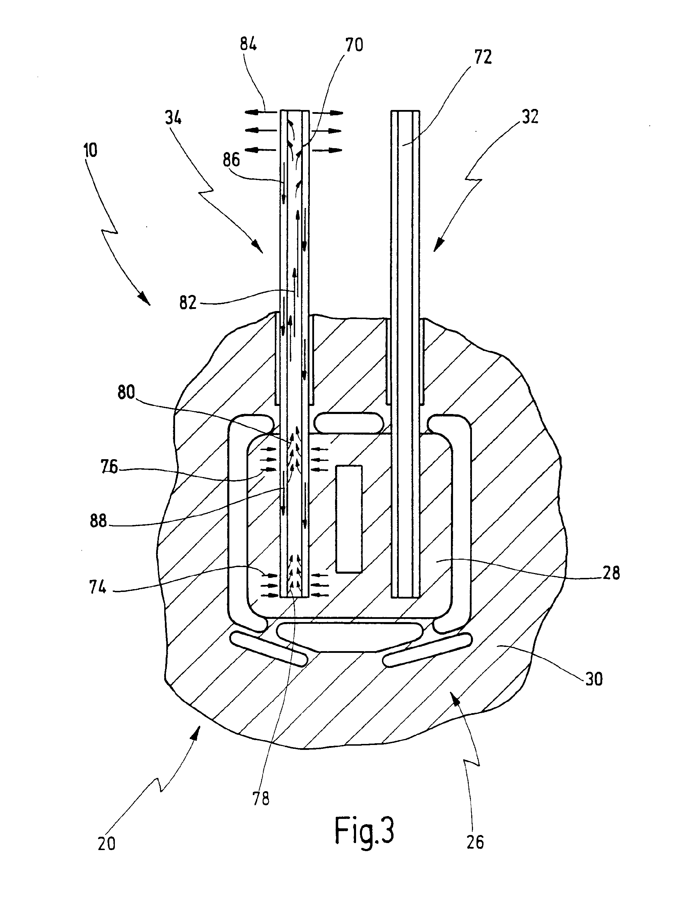

In Fig. 3 ist ein gegenüber Fig. 2 geringfügig abgewandeltes Ausführungsbeispiel der optischen Anordnung 10 dargestellt, bei dem die wärmeleitfähigen Elemente 32 und 34 in Form jeweils einer Heat-Pipe 70 bzw. 72 ausgebildet sind. Die Heat-Pipes 70 bzw. 72 sind hohle Stangen bzw. Röhren, in denen eine geringe Menge an Flüssigkeit vakuumdicht eingeschlossen ist.

Wie für die Heat-Pipe 70 in Fig. 3 dargestellt ist, nimmt die Heat-Pipe 70 in ihrem mit dem inneren Abschnitt 28 des optisch unwirksamen zweiten Bereichs 26 des optischen Bauelements 20 wärmeleitend verbundenen Abschnitt gemäß Pfeilen 74 und 76 Wärme von dem inneren Abschnitt 28 auf, was zu einer Verdampfung der Flüssigkeit innerhalb der Heat-Pipe 70 führt. Der so entstehende Dampf steigt im Innern der Heat-Pipe 70 gemäß Pfeilen 78 bis 82 nach oben, wobei die von dem inneren Abschnitt 28 aufgenommene Wärme als latente Wärme in dem Dampf gespeichert ist. Am kälteren Ende der Heat-Pipe 70, das außerhalb des Gehäuses 18 angeordnet ist, kondensiert der Dampf, wobei die dabei freiwerdende Wärme von der Heat-Pipe 70 an die Umgebung gemäß Pfeilen 84 abgegeben wird. Selbstverständlich können an diesem Ende der Heat-Pipe 70 und auch bei der Heat-Pipe 72 ebenfalls Wärmeabstrahlkörper 46 gemäß Fig. 2 angeordnet sein. Das Kondensat gelangt dann im Mantelbereich der Heat-Pipe 70 aufgrund von Gravitation und/oder Kapillarwirkung, die durch ggf. in der Heat-Pipe 70 in dessen Randbereich vorgesehene Fasern bewirkt wird, gemäß Pfeilen 86 und 88 wieder in den Bereich des inneren Abschnitts 28, um dort erneut Wärme aufzunehmen.

## Patentansprüche

1. Optische Anordnung innerhalb eines optischen Systems (12), mit einem in einem Gehäuse (18) angeordneten optischen Bauelement (20), das einen optisch wirksamen ersten Bereich (24), der auf einer optischen Achse (16) des optischen Systems (12) positioniert ist, und einen den optisch wirksamen ersten Bereich (24) zumindest teilweise umgebenden optisch unwirksamen zweiten Bereich (26) aufweist, **dadurch gekennzeichnet, daß** mit dem optisch unwirksamen zweiten Bereich (26) des Bauelements (20) zumindest ein wärmeleitfähiges Element (32, 34) zum Abführen von Wärme von dem optisch unwirksamen zweiten Bereich (26) aus dem Gehäuse (18) heraus wärmeleitend verbunden ist.

2. Anordnung nach Anspruch 1, **dadurch gekennzeichnet, daß** innerhalb des zweiten Bereichs (26) zumindest eine Wärmebarriere (48) angeordnet ist.

3. Anordnung nach Anspruch 2, **dadurch gekennzeichnet, daß** die zumindest eine Wärmebarriere (48) durch zumindest ein in dem zweiten Bereich (26) angeordnetes Wärmeisolatorelement gebildet ist.

4. Anordnung nach Anspruch 2 oder 3, **dadurch gekennzeichnet, daß** die zumindest eine Wärmebarriere (48) durch zumindest einen Luftspalt (50-60) in dem zweiten Bereich (26) gebildet ist.

5. Anordnung nach einem der Ansprüche 1 bis 4, **dadurch gekennzeichnet, daß** der zweite Bereich (26) einen der optischen Achse (16) näher gelegenen inneren Abschnitt (28) und einen diesen umgebenden äußeren Abschnitt (30) aufweist, wobei die beiden Abschnitte (28, 30) über zumindest einen Gelenkabschnitt (66, 68) miteinander verbunden sind.

6. Anordnung nach Anspruch 5, **dadurch gekennzeichnet, daß** mehrere Gelenkabschnitte (66, 68) vorgesehen sind, die bezüglich der optischen Achse (16) symmetrisch verteilt sind.

7. Anordnung nach Anspruch 4 und 5 oder 6, **dadurch gekennzeichnet, daß** der zumindest eine Luftspalt (50-60) durch Materialausnehmung in dem zweiten Bereich (26) gebildet ist, und daß der zumindest eine Gelenkabschnitt (66, 68) durch bei der Materialausnehmung stehengebliebene Materialstege gebildet ist.

8. Anordnung nach einem der Ansprüche 1 bis 7, **dadurch gekennzeichnet, daß** das zumindest eine wärmeleitfähige Element (32, 34) eine Stange (36, 38; 70, 72) ist, die mit zumindest einem Ende aus dem Gehäuse (18) herausgeführt ist, ohne das Gehäuse (18) zu berühren.

9. Anordnung nach Anspruch 8, **dadurch gekennzeichnet, daß** die Stange (36, 38) zumindest teilweise massiv aus einem wärmeleitfähigen Material ausgebildet ist.

10. Anordnung nach Anspruch 8, **dadurch gekennzeichnet, daß** die Stange (70, 72) zumindest teilweise hohl ist und von einer zirkulierenden Flüssigkeit durchströmt ist.

11. Anordnung nach Anspruch 8 oder 10, **dadurch gekennzeichnet, daß** die Stange (70, 72) als Heat-Pipe ausgebildet ist.

12. Anordnung nach einem der Ansprüche 8 bis 11, **dadurch gekennzeichnet, daß** eine Mehrzahl an Stangen (36, 38; 70, 72) als wärmeleitfähige Elemente (32, 34) mit dem zweiten Bereich (26) in bezüglich der optischen Achse (16) symmetrischer Anordnung verbunden sind.

13. Anordnung nach einem der Ansprüche 8 bis 12, **dadurch gekennzeichnet, daß** am aus dem Gehäuse (18) vorstehenden Ende der zumindest einen Stange (36, 38; 70, 72) zumindest ein Wärmeabstrahlkörper (46) angeordnet ist.

14. Anordnung nach einem der Ansprüche 8 bis 13, **dadurch gekennzeichnet, daß** sich die zumindest eine Stange (36, 38) vollständig in der Umgebungsatmosphäre befindet.

15. Anordnung nach einem der Ansprüche 1 bis 14, **dadurch gekennzeichnet, daß** das Bauelement (20) eine Blende ist, wobei der optisch wirksame erste Bereich (24) die Blendenöffnung und der optisch unwirksame zweite Bereich (26) der die Blendenöffung umgebende Blendenkörper ist.

16. Optisches System, insbesondere Laser-System, **gekennzeichnet durch** eine optische Anordnung (10) nach einem der Ansprüche 1 bis 15.
